Europäisches Patentamt

(19) European Patent Office

Office européen des brevets

(11) Publication number: **0 297 884 B1**

## (12) EUROPEAN PATENT SPECIFICATION

(45) Date of publication of patent specification:
02.10.91 Bulletin 91/40

(51) Int. Cl.⁵: **F16K 31/64, G05D 11/13,
G05D 27/02**

(21) Application number: 88305975.0

(22) Date of filing: 29.06.88

(54) Bath filler.

(30) Priority: 03.07.87 GB 8715718

(43) Date of publication of application:
04.01.89 Bulletin 89/01

(45) Publication of the grant of the patent:
02.10.91 Bulletin 91/40

(84) Designated Contracting States:
AT BE CH DE ES FR GB GR IT LI LU NL SE

(56) References cited:
EP-A- 0 041 793
DE-A- 3 430 176
DE-B- 2 251 581
GB-A- 2 082 350
GB-A- 2 174 219

(73) Proprietor: ARMITAGE SHANKS LIMITED
Armitage
Rugeley Staffordshire WS15 4BT (GB)

(72) Inventor: Newcombe, Hayden John
1 Pinfold Lane Penn
Wolverhampton West Midlands (GB)
Inventor: Lowe, Jeffrey Charles
275 Aldersley Road Tettenhall
Wolverhampton West Midlands (GB)

(74) Representative: Hands, Horace Geoffrey et al
GEORGE FUERY & CO Whitehall Chambers 23
Colmore Row
Birmingham B3 2BL (GB)

## Description

This invention relates primarily to bath fillers.

A conventional filler may comprise two taps feeding a common spout or a mixer spout. A common practice is to run at least the hot tap to run off the content of the main supply pipes extending towards the hot water source containing cool or cold water (the "dead leg") and then adjust the setting of both taps empirically to stabilise delivery temperature at a suitable level, before filling commences. This is wasteful of water.

DE-A-3430176 proposes a water mixing valve under the control of a microprocessor so that a predetermined temperature and possibly also flow rate can be achieved, using a motor which adjusts the positions of individual flow control valves in hot and cold supply lines and also in the outlet from the valve. The microprocessor has a memory enabling a choice of desired flow rates and temperatures to be achieved. This avoids the need for empirical adjustment to produce an outlet stream of the required temperature, but does nothing to reduce waste of water and time. The object of the invention is to reduce this waste.

According to the invention a bath filling system comprises individual hot and cold water supplies, a separate control valve in each supply, motor means for adjusting said valves, a mixing chamber, a temperature sensor in the mixing chamber, a microprocessor connected to the motor means and the sensor and to a memory for recording desired mixed water temperature values, and characterised in that the memory is arranged to store a value proportional to the content of the dead leg between the hot water source and the mixing valve and is connected to a flow rate indicator, and the desired filled volumes of the bath, so that bath filling may commence utilising the dead leg and the temperature of the output from the mixing chamber rising during the filling operation.

Preferably also closure of the waste outlet is controlled by the microprocessor.

One microprocessor input may be a hot tank sensor to read hot water source temperature, for example a thermocouple, feeding via an analog/digital converter.

Hence if the microprocessor "knows" from one of the memory inputs that a required final volume is (say) 75 litres, at a final temperature (also derived from a memory input) of (say) 45 degrees C, then temperature sensing of both hot and cold temperature and actual mixed temperature, for example as delivered through the valve, enables the flow rates of both hot and cold supplies to be continually proportioned from commencement of filling, so that the bath or like attains the required temperature of content partway through the filling cycle or possibly only at the completion of the filling cycle, instead of commencing to fill at the required temperature, but with a saving in water. The invention will result in the temperature of the water in the bath rising to a final required temperature as the bath fills rather than falling to it, and this is an important safety feature.

Preferably the memory includes settings for at least two different total delivery volumes, for example a full bath or a shallow bath, and at least two different temperatures. These may be selected for use for example by use of a key pad connected to the microprocessor.

The input signal to commence operation may initially provide an output signal for a power operated waste plug, for example a solenoid operated waste plug. Alternatively, location of the waste plug in the waste aperture may send a signal to the microprocessor to bring the flow control valves into operation. But in a simpler version the plug may be manually operated and the microprocessor operated for example by a start switch when that has been done.

Where the bath filler includes a shower diverter valve, operation of the diverter valve may bypass portions of the programme or memory including that requiring the waste plug to be inserted (where such is included), and essentially select a programme segment which adjusts the valves to give an outlet flow at a required (input or memory selected) temperature.

It will be appreciated that the key-pad and display may be remote from the filler spout and control assembly, with the connection between the two being only by way of a cable carrying digital signals. From temperature and possibly also pressure sensors it is possible to derive flow rate indication for calculation by the microprocessor. The microprocessor itself with any desired analog/digital converter, power supply, and possibly any transformer or the like may also be remote from the key pad or control board. Thus the filler per se may be on the bath, the microprocessor wall mounted in the bathroom, and the key pad in a different room such as a bedroom.

Additional sub-circuits in the microprocessor may automatically close the valve(s) to stop all flow after a certain volume has been delivered, as an anti-flooding safety means : prevent operation if pressure in either main supply falls below a critical level e.g. no water is available ; and prevent operation if temperature at one source (especially the hot tank) is outside certain limits i.e. the inability to provide an acceptable bath occurs.

A valve which is suitable to supply water in use of the invention is now more particularly described with reference to the accompanying drawings in which :

Figure 1 is a sectional elevation of the valve mentioned ; and

Figures 2 to 5 show a part of the valve in different positions.

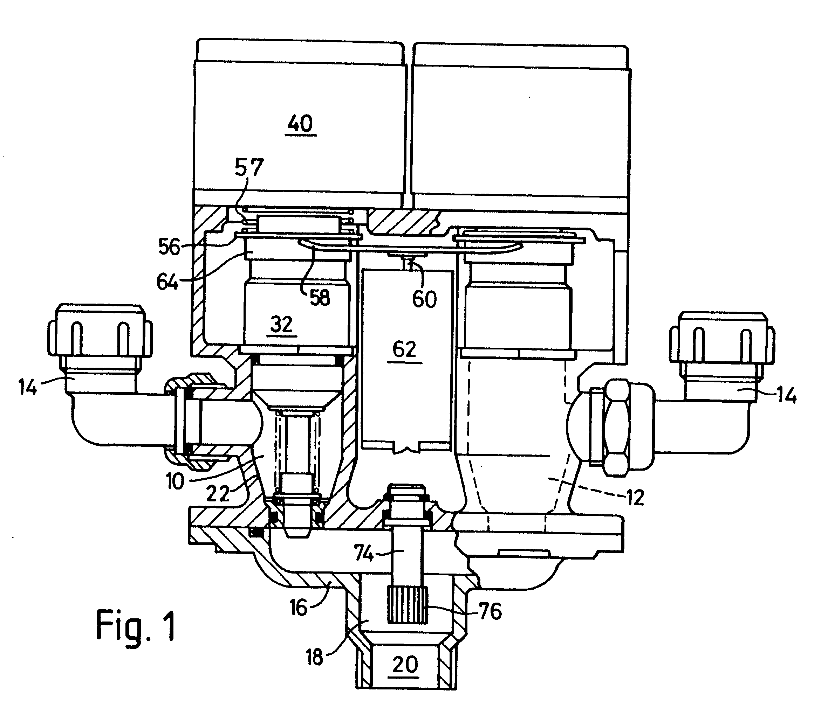

Turning now to Figure 1, the valve shown has two separate chambers 10, 12, each connected to a corresponding inlet 14 and to a common manifold 16 of which part forms a vortex mixing chamber 18 at times when water is being supplied through the two separate chambers. A common outlet 20 is provided. Each chamber houses a control valve. As the two chambers and control valves are identical, only one will be described.

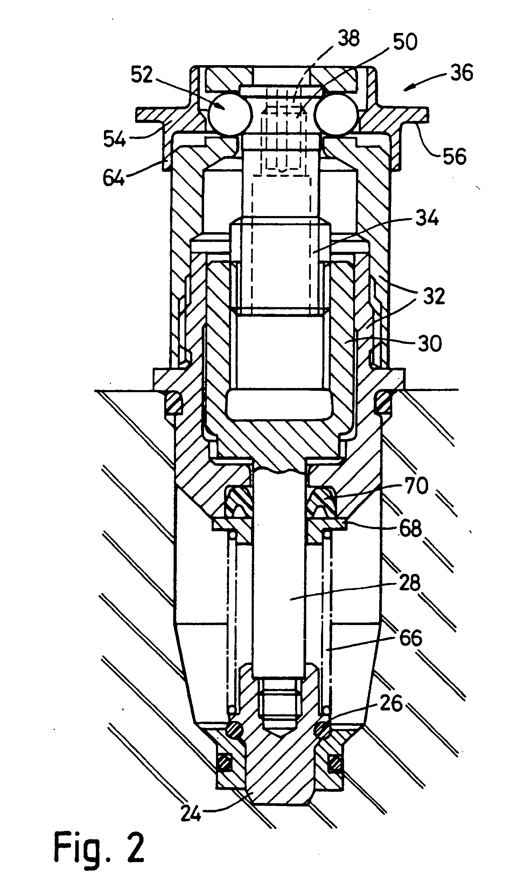

The chamber has a frusto-conical passage 22 narrowing towards the outlet. Closure plug 24 (Figures 2 to 5) is to close the chamber outlet 72 and has an 'O' ring seal 26 for this purpose. The arrangement and shape is such that the plug can be moved from the closed position to the fully open position through a range of intermediate positions which allow progressively greater flow rates.

The plug is carried by a stem 28 fast with a nut 30 which is non-rotatable in a two part housing 32 as by making the nut hexagonal and the housing of like interior shape. The nut 30 is engaged with a screw 34 which is held axially captive by a clutch 36. The screw has a non-circular bore 38 in sliding engagement with the complementary drive shaft (not shown) of a stepping motor 40, Figure 1.

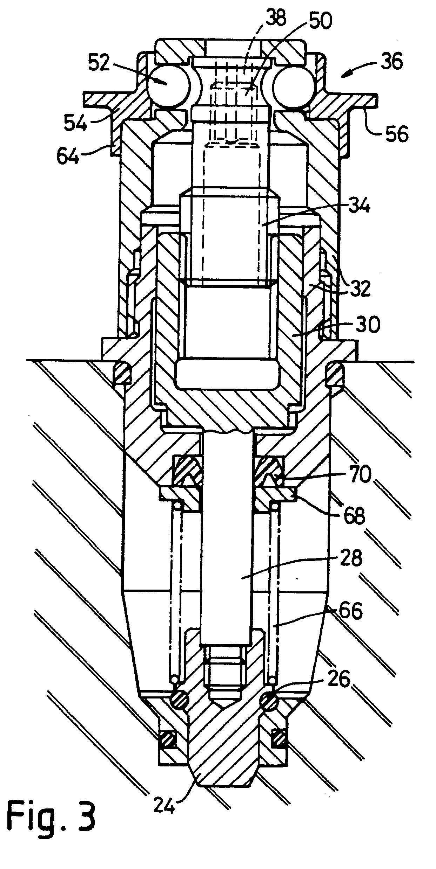

The screw and nut may have any suitable screwthreads for example multi-start and appropriate thread profile so that rotation of the drive shaft in one or other direction causes the nut to rise or fall relative to the screw when the screw is axially fixed. The clutch 36 is for fixing the screw axially and comprises a hub 50 with a peripheral groove to engage clutch balls 52 which can move radially from the engaged position of Figure 2 to the disengaged position of Figure 3 under the control of a cam face on the interior of a clutch ring 54 when the ring is moved axially between positions seen in Figures 2 and 3. The ring has a radial flange 56 for actuation by fork 58 Figure 1, carried by solenoid pin 60 arranged so that energisation of the solenoid 62 lifts the ring against spring 57 to the Figure 2 position and engages the clutch, i.e. forces the ball radially inwards to engage in the groove and lock the screw 34 in position axially whilst leaving it free to rotate.

The clutch ring 54 is guided for axial movement by column 64 sliding on the housing 32.

The plug 24 and its stem 28 with the nut 30 are all urged by spring 66 which in this instance is a helical compression spring trapped between the plug and a collar 68 which also serves to locate a hydraulic seal 70.

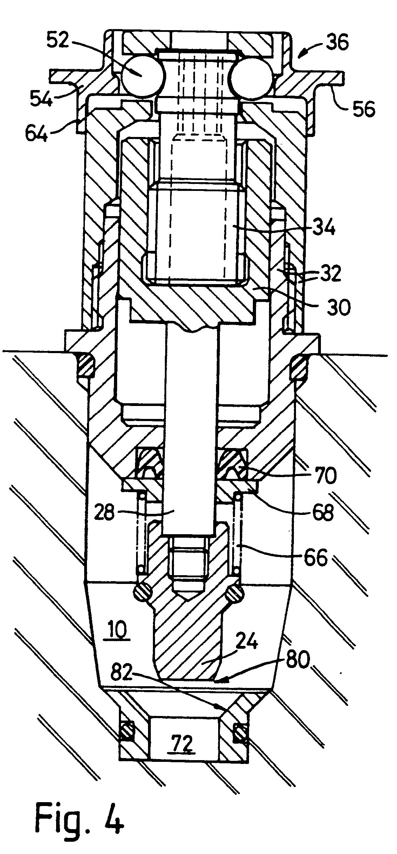

Certain parts of the cycle of operation can now be described. Assuming that water and power are connected and the valve is in the closed normal condition, a demand for water leads to the solenoid being energised to the Figure 2 condition and the stepping motor 40 being pulsed. Each pulse may turn the drive shaft through a small increment of the order of one or two degrees, turning the screw likewise, and moving the nut, stem and plug axially to open the valve. The flow depends upon the axial position. A train of pulses can result in rapid movement to full open position Figure 4 and vice versa. The valve may be continually adjusted as necessary, in conjunction with similar but not necessarily like or simultaneous adjustment of the second valve to produce the required temperature in mixed flow, although the microprocessor control will normally operate to run one or other valve in the fully open position and modulate the other to maintain the required temperature at the outlet.

If there is an emergency due to either supply failing, the valve would ordinarily shut-down as it becomes impossible to maintain the required operating conditions.

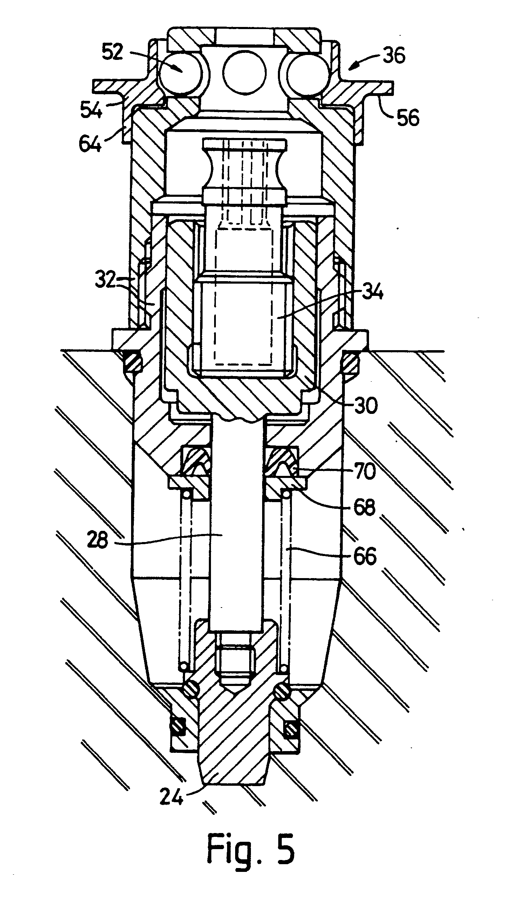

However, a rapid so as to be almost instantaneous shut-down is provided by the solenoid clutch. De-energisation as a result of power failure or on a signal from the microprocessor results in pin 60 falling, fork 58 allowing the clutch ring to follow (urged by spring 57), and move from the Figure 2 position to the Figure 3 position. If the valve was open, then spring 66 and water pressure displaces the screw and nut in whatever adjusted position they were in to the Figure 5 position. This is much more rapid than can possibly be achieved by any rotation of the drive shaft because it accomplished by the spring driven sliding movement of the whole screw and nut relative to the drive shaft. Such de-energisation also terminates the train of pulses to the drive motor. However the length of the drive shaft (not shown) is such that it remains in driving engagement with the screw even in the Figure 5 position.

Upon re-energisation, the circuitry causes a train of pulses to the drive motor sufficient to rotate the shaft and return the screw from the Figure 5 position to the Figure 3 position and only then re-energises the solenoid to move the parts to the Figure 2 position before re-opening the valve if required.

When there is flow through both chambers, they meet in the manifold and flow through outlet 20. It has been found that little mixing takes place unless turbulence is created, for this purpose a turbulator is provided having a knurled or otherwise roughened end 76 located in the chamber. This knurling also increases surface area for heat transfer. Conveniently the turbulator provides a housing for a temperature sensor 74 to read outlet temperature. However this may not be necessary if supply temperatures are being read.

In a preferred operating cycle utilising the valve so far described with appropriate microprocessor circuitry and other sensors, the waste plug is inserted and the system started by the valve controlling the hot water flow being substantially fully opened. Initially this will discharge cold water (the dead leg) into the bath and then the temperature will rise as the hot water runs in. The temperature is sensed in the outlet of the valve at regular intervals and the signals fed to the microprocessor. When the microprocessor calculates that the temperature in the bath approaches the required temperature, which is actually below the temperature of the hot water flow, the cold supply valve is opened partially and adjusted in position to proportion the flow so that the temperature at the outlet from the valve is more nearly approximate to the required bath temperature. As the filling continues, the microprocessor calculates the point when the cold valve will be shut off and the hot valve allowed to run alone, so as to raise the bath contents to the final temperature. Hence, it is probable that the hot supply will be substantially full on throughout the entire cycle, and the cold supply will be on for a short time and at less than full volume. The bath will only reach the required temperature shortly before the last of the valves closes down.

However, during the time when both valves are open, ideally, neither valve needs to be adjusted in position, but in practice it is likely that the temperature of one or other supply will vary because the hot tank supplying the hot water is being refilled with cold water, or because cold water is being drawn off a main which may be below ground and contain water at a different temperature to that in the supply pipe leading to the valve, and in this event one or other of the valves may be automatically adjusted by the read temperature being used to cause a train of pulses to one of the stepping motors and hence adjustment of the corresponding valve position.

Alternative operating systems possible with the same valve and microprocessor, albeit with different programmes, include the possibility of both valves being fully opened initially and then one, usually the cold supply valve being closed at an earlier point in the cycle than would be the case in the preferred arrangement, but again allowing the temperature to rise towards the required final level.

According to another possibility, both valves are run throughout the whole of the cycle delivering a proportioned flow more closely approximate to the required final temperature for substantially the whole of the required operating time.

## Claims

1. A bath filling system comprising individual hot and cold water supplies (14), a separate control valve (24) in each supply, motor means (40) for adjusting said valves, a mixing chamber (16), a temperature sensor (76) in the mixing chamber (16) and a microprocessor connected to the motor means (40) and the sensor (76) and to a memory for recording desired mixed water temperature values, characterised in that the memory
a) is arranged to store a value proportional to the content of the dead leg between the hot water source and the mixing valve,
b) is further connected to a flow rate indicator, and
c) is arranged to store a value proportional to the desired filled volume of the bath
so that that filling may commence utilizing the dead leg, and the temperature of the output from the mixing chamber (16) rises during the filling operation.

2. A bath filler as claimed in Claim 1 wherein a signal is derived form closure of the waste outlet and connected to the microprocessor for causing initiation of a complete cycle of operations.

3. A bath filler as claimed in Claim 1 or Claim 2 wherein the waste outlet is closed by a plug which is power operated by a signal derived from the microprocessor.

4. A bath filler as claimed in any of Claims 1-3 wherein one microprocessor input is a hot tank sensor to read hot water source temperature.

5. A bath filler as claimed in any preceding claim wherein a microprocessor input is a memory reading derived from a calibration test run on the installation.

6. A bath filler as claimed in Claim 5 wherein the memory setting inludes two alternate programmes of different delivery volume.

7. A bath filler as claimed in any preceding claim wherein the flow control valves include a shower diverter valve and operation of the same bypasses portions of the microprocessor programme so as to deliver mixed water at the required temperature.

## Patentansprüche

1. Badfüllvorrichtung, enthaltend getrennte Kalt- und Warmwasserzuläufe (14), ein gesondertes Steuerventil (24) in jedem Zulauf, einen Motorantrieb (40) zur Einstellung der Ventile, eine Mischkammer (16), einen Temperatursensor (76) in der Mischkammer (16) und einen Mikroprozessor, der mit dem Motorantrieb (40) und dem Sensor (76) sowie mit einem Speicher verbunden ist, der die gewünschten Mischwasser- Temperaturwerte registriert, dadurch gekennzeichnet, daß der Speicher
a) einen Wert speichert, der proportional zum Inhalt der Totstrecke zwischen der Heißwasserquelle und dem Mischventil ist,
b) mit einem Durchflußmesser verbunden ist und
c) einen Wert speichert, der proportional zum gewünschten Füllvolumen des Bades ist,
so daß das Füllen des Bades unter Berücksichtigung der Totstrecke beginnen kann und die Temperatur des Auslaufs aus der Mischkammer (16) während des Befüllens steigt.

2. Badfüllvorrichtung nach Anspruch 1, wobei ein Signal durch das Schließen des Abflusses gewonnen und dem Mikroprozessor zugeleitet wird, um einen vollständigen Zyklus der Arbeitsgänge auszulösen.

3. Badfüllvorrichtung nach Anspruch 1 oder 2, wobei der Abfluß mit einem Stöpsel verschlossen wird, der durch ein vom Mikroprossor gewonnenes Signal angetrieben wird.

4. Badfüllvorrichtung nach wenigstens einem der vorhergehenden Ansprüche, wobei ein Input des Mikroprozessors ein Hitzetanksensor ist, der die Temperatur der Heißwasserquelle abliest.

5. Badfüllvorrichtung nach wenigstens einem der vorhergehenden Ansprüche, wobei ein Input des Mikroprozessors eine Speicherablesung des Mikroprozessors ist, die einem Einstelltestlauf auf der Installation entnommen wird.

6. Badfüllvorrichtung nach Anspruch 5, wobei die Speichereinstellung zwei alternative Programme mit unterschiedlicher Leistungsmenge enthält.

7. Badfüllvorrichtung nach jedwedem der vorangegangenen Ansprüche, wobei die Steuerventile des Durchflusses ein Duschabzweigventil enthalten, dessen Bedienung der Umgehung von Teilen des Mikroprozessorprogrammes dient, so daß ein Wassergemisch der gewünschten Temperatur erzielt wird.

**Revendications**

1. Dispositif de remplissage de bain comprenant des alimentations individuelles d'eau chaude et d'eau froide (14), une soupape de commande séparée (24) logée dans chaque alimentation, un moyen moteur (40) pour régler lesdites soupapes, une chambre de mélangeage (16), un capteur de température (76) dans la chambre de mélangeage (16), et un microprocesseur relié au moyen moteur (40) et au capteur (76) et à une mémoire afin d'enregistrer des valeurs désirées de température d'eau mélangée, caractérisé en ce que la mémoire

a) est conçue pour emmagasiner une valeur proportionnelle au contenu d'eau froide en attente entre la source d'eau chaude et la soupape de mélangeage,

b) est de plus reliée à un indicateur de débit, et

c) est conçue pour emmagasiner une valeur proportionnelle au volume désiré de remplissage du bain

de façon que ce remplissage puisse commencer par l'utilisation du contenu d'eau froide, et que la température à la sortie de la chambre de mélangeage (16) s'élève pendant l'opération de remplissage.

2. Dispositif de remplissage de bain selon la revendication 1, dans lequel un signal provenant de la fermeture de la sortie d'écoulement est envoyé au microprocesseur pour initier un cycle complet d'opérations.

3. Dispositif de remplissage de bain selon la revendication 1 ou la revendication 2, dans lequel la sortie d'écoulement est fermée par un obturateur qui est actionné par un signal provenant du microprocesseur.

4. Dispositif de remplissage de bain selon l'une quelconque des revendications 1 à 3, dans lequel une entrée du microprocesseur est un capteur pour réservoir d'eau chaude conçu pour lire la température de la source d'eau chaude.

5. Dispositif de remplissage de bain selon l'une quelconque des revendications précédentes, dans lequel une entrée du microprocesseur est une lecture de mémoire provenant d'un essai de calibration lié à l'installation.

6. Dispositif de remplissage de bain selon la revendication 5, dans lequel le réglage de mémoire comprend deux programmes alternatifs correspondant à des volumes fournis différents.

7. Dispositif de remplissage de bain selon l'une quelconque des revendications précédentes, dans lequel les soupapes de commande de débit comprennent une soupape de dérivation de douche, dont l'actionnement détourne des parties du programme du microprocesseur pour fournir de l'eau mélangée à la température demandée.

Fig. 1

Fig. 2

Fig. 3

Fig. 4

Fig. 5